# EUROPEAN PATENT SPECIFICATION

(11) **EP 2 946 092 B1**
(45) Date of publication and mention of the grant of the patent: **17.04.2019**
(21) Application number: 13871786.3
(22) Date of filing: 17.01.2013
(51) Int. Cl.: F23R 3/00, F23R 3/50

(54) **GAS TURBINE ENGINE COMBUSTOR LINER ASSEMBLY WITH CONVERGENT HYPERBOLIC PROFILE**
AUSKLEIDUNGSANORDNUNG FÜR GASTURBINENBRENNKAMMER MIT KONVERGIERENDEM HYPERBOLISCHEM PROFIL
ENSEMBLE REVÊTEMENT POUR CHAMBRE DE COMBUSTION DE TURBINE À GAZ ÉQUIPÉ D'UN PROFIL HYPERBOLIQUE CONVERGENT

(43) Date of publication of application: 25.11.2015
(73) Proprietor: United Technologies Corporation, Farmington, CT 06032 (US)
(72) Inventor: CUNHA, Frank J., Avon, Connecticut 06001 (US); ERBAS-SEN, Nurhak, Manchester, Connecticut 06040 (US)
(74) Representative: Dehns
(86) International application number: PCT/US2013/021921
(87) International publication number: WO 2014/113007

(56) References cited:
- EP-A2- 2 273 196
- WO-A1-2013/184502
- WO-A2-2014/081492
- US-A- 5 619 855
- US-A1- 2005 061 004
- US-A1- 2011 107 766
- US-A1- 2011 126 543
- US-A1- 2011 126 543
- US-B1- 6 237 344
- US-B1- 6 282 905

## Description

### BACKGROUND

The present disclosure relates to a gas turbine engine and, more particularly, to a combustor section therefor.

Gas turbine engines, such as those that power modern commercial and military aircraft, generally include a compressor to pressurize an airflow, a combustor for burning a hydrocarbon fuel in the presence of the pressurized air, and a turbine to extract energy from the resultant combustion gases.

As engine requirements increase for improved thrust specific fuel consumption (TSFC), compressor discharge pressure and temperature along with combustor exit temperatures (CET) may also increase. As a result, current combustor configurations emissions, such as NOx, CO, unburned hydrocarbons (UHC), and smoke, may increase relative to exceedingly stringent emissions standards.

US 2011/126543 A1 discloses features of the preamble of claim 1, WO 2014/081492 A2 is prior art under Art. 54(3) EPC, and US 2011/107766 A1 is a combustor assembly of the prior art.

### SUMMARY

A liner assembly for a combustor of a gas turbine engine according to one disclosed non-limiting embodiment of the present disclosure is claimed in claim 1.

A further embodiment of any of the foregoing embodiments, of the present disclosure wherein the convex profile provides an approximate 4.5 inlet-to-exit area ratio.

A further embodiment of any of the foregoing embodiments, of the present disclosure wherein the convex profile provides a flow acceleration toward approximately 0.5 Mach towards a end of a convergent section.

A further embodiment of any of the foregoing embodiments, of the present disclosure includes an exit splitter that extends from the heat shield.

In the alternative or additionally thereto, the foregoing embodiment wherein the exit splitter is zigzag in shape.

In the alternative or additionally thereto, the foregoing embodiment further comprising a film hole located in a valley on each side of the exit splitter.

A further embodiment of any of the foregoing embodiments, of the present disclosure includes a plurality of studs which extend from the heat shield and are received through the support shell, the stud include a frustro-conical section.

A further embodiment of any of the foregoing embodiments, of the present disclosure wherein the heat shield includes a number of film holes which are approximately equal to a number of impingement holes through the support shell.

A further embodiment of any of the foregoing embodiments, of the present disclosure wherein the heat shield includes a multiple of pin fins.

In the alternative or additionally thereto, the foregoing embodiment wherein the multiple of pin fins are diamond-shaped.

A further embodiment of any of the foregoing embodiments, of the present disclosure wherein the heat shield includes a multiple of hemi-spherical dimples.

In the alternative or additionally thereto, the foregoing embodiment includes a multiple of hemi-spherical dimples decrease in diameter toward an exit splitter.

In the alternative or additionally thereto, the foregoing embodiment includes a center of the sphere of each of the multiple of hemi-spherical dimples are further displaced from an inner surface of the heat shield toward an exit splitter.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is an expanded longitudinal schematic sectional view of a combustor section according to one non-limiting embodiment that may be used with the gas turbine engine shown in Figure 1;
Figure 3 is an expanded partial perspective longitudinal schematic view of a combustor section according to one non-limiting embodiment that may be used with the gas turbine engine shown in Figure 1;
Figure 4 is an exploded view of a liner assembly of the combustor;
Figure 5 is an expanded circumferentially partial perspective view of the combustor section associates with one pre-swirler;
Figure 6 is an expanded lateral sectional view of a liner assembly according to one non-limiting embodiment;
Figure 7 is an expanded lateral sectional view of the liner assembly of Figure 6 with a relationship for a convex profile that faces an inner surface of a heat shield of the liner assembly;
Figure 8 is an expanded plan view of a heat shield of a liner assembly according to one non-limiting embodiment;
Figure 9 is an expanded plan view of a heat shield of a liner assembly according to another non-limiting embodiment;
Figure 10 is an expanded lateral sectional view of two adjacent liner assemblies;
Figure 11 is an expanded perspective view of an overlapping interface between two adjacent liner assemblies;
Figure 12 is an expanded lateral sectional view of two adjacent liner assemblies;
Figure 13 is a forward view of two adjacent combustor sections facing a bulkhead heat shield illustrating cooling flow according to one non-limiting embodiment;
Figure 14 is a forward view of a combustor section facing a bulkhead heat shield illustrating cooling flow according to another non-limiting embodiment;
Figure 15 is a forward view of a combustor section facing a bulkhead heat shield illustrating cooling flow according to another non-limiting embodiment; and
Figure 16 is an expanded lateral sectional view of two adjacent liner assemblies.

### DETAILED DESCRIPTION

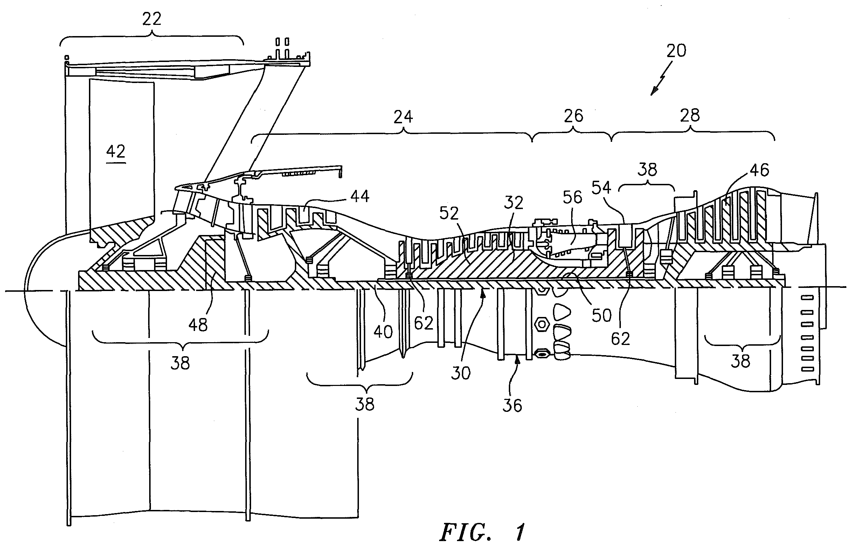

Figure 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a turbojets, turboshafts, and three-spool (plus fan) turbofans wherein an intermediate spool includes an intermediate pressure compressor ("IPC") between a Low Pressure Compressor ("LPC") and a High Pressure Compressor ("HPC"), and an intermediate pressure turbine ("IPT") between the high pressure turbine ("HPT") and the Low pressure Turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The turbines 54, 46 rotationally drive the respective low spool 30 and high spool 32 in response to the expansion. The main engine shafts 40, 50 are supported at a plurality of points by bearing structures 38 within the static structure 36. It should be understood that various bearing structures 38 at various locations may alternatively or additionally be provided.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the low pressure compressor 44 and low pressure turbine 46 and render increased pressure in a fewer number of stages.

A pressure ratio associated with the low pressure turbine 46 is pressure measured prior to the inlet of the low pressure turbine 46 as related to the pressure at the outlet of the low pressure turbine 46 prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 44, and the low pressure turbine 46 has a pressure ratio that is greater than about five (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow path due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("T" / 518.7)^{0.5} in which "T" represents the ambient temperature in degrees Rankine. The Low Corrected Fan Tip Speed according to one non-limiting embodiment of the example gas turbine engine 20 is less than about 1150 fps (351 m/s).

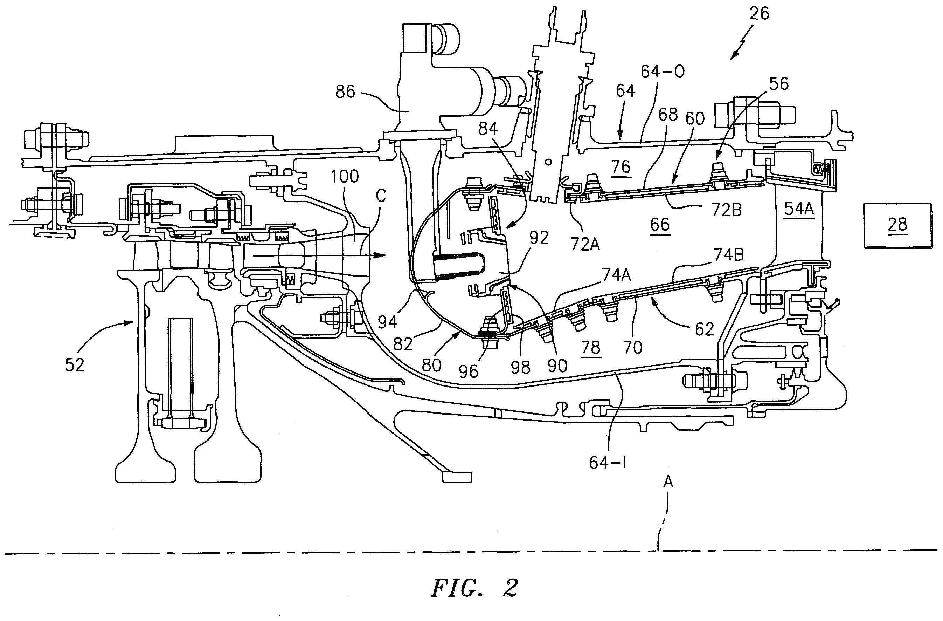

With reference to Figure 2, the combustor 56 generally includes an outer combustor liner assembly 60, an inner combustor liner assembly 62 and a diffuser case module 64. The outer combustor liner assembly 60 and the inner combustor liner assembly 62 are spaced apart such that a combustion chamber 66 is defined therebetween. The combustion chamber 66 is generally annular in shape.

The outer combustor liner assembly 60 is spaced radially inward from an outer diffuser case 64-O of the diffuser case module 64 to define an outer annular plenum 76. The inner combustor liner assembly 62 is spaced radially outward from an inner diffuser case 64-I of the diffuser case module 64 to define an inner annular plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

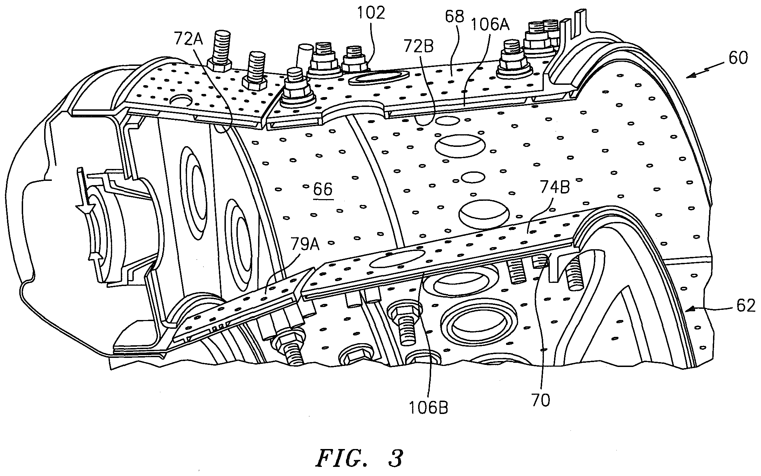

The combustor liner assemblies 60, 62 contain the combustion products for direction toward the turbine section 28. Each combustor liner assembly 60, 62 generally includes a respective support shell 68, 70 which supports one or more heat shields 72, 74 mounted to a hot side of the respective support shell 68, 70. Each of the heat shields 72, 74 may be generally rectilinear and manufactured of, for example, a nickel based super alloy, ceramic or other temperature resistant material and are arranged to form a liner array. In one disclosed non-limiting embodiment, the liner array includes a multiple of forward heat shields 72A and a multiple of aft heat shields 72B that are circumferentially staggered to line the hot side of the outer shell 68 (also shown in Figure 3). A multiple of forward heat shields 74A and a multiple of aft heat shields 74B are circumferentially staggered to line the hot side of the inner shell 70 (also shown in Figure 3).

The combustor 56 further includes a forward assembly 80 immediately downstream of the compressor section 24 to receive compressed airflow therefrom. The forward assembly 80 generally includes an annular hood 82, a bulkhead assembly 84, a multiple of fuel nozzles 86 (one shown) and a multiple of fuel nozzle pre-swirlers 90 (one shown). Each of the fuel nozzle pre-swirlers 90 is circumferentially aligned with one of the hood ports 94 to project through the bulkhead assembly 84. Each bulkhead assembly 84 includes a bulkhead support shell 96 secured to the combustor liner assemblies 60, 62, and a multiple of circumferentially distributed bulkhead heat shields 98 secured to the bulkhead support shell 96 around the central opening 92.

The annular hood 82 extends radially between, and is secured to, the forwardmost ends of the combustor liner assemblies 60, 62. The annular hood 82 includes a multiple of circumferentially distributed hood ports 94 that accommodate the respective fuel nozzle 86 and introduce air into the forward end of the combustion chamber 66 through a central opening 92. Each fuel nozzle 86 may be secured to the diffuser case module 64 and project through one of the hood ports 94 and through the central opening 92 within the respective fuel nozzle guide 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

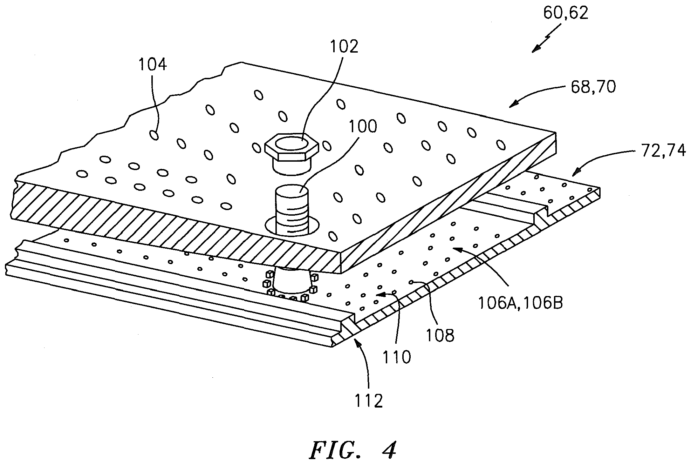

With reference to Figure 4, a multiple of studs 100 extend from the heat shields 72, 74 to mount the heat shields 72, 74 to the respective support shells 68, 70 with fasteners 102 such as nuts (also shown in Figure 3). That is, the studs 100 project rigidly from the heat shields 72, 74 and through the respective support shells 68, 70 to receive the fasteners 102 at a threaded distal end section thereof.

A multiple of cooling impingement holes 104 penetrate through the support shells 68, 70 to allow air from the respective annular plenums 76, 78 to enter cavities 106A, 106B (also shown in Figure 3) formed in the combustor liner assemblies 60, 62 between the respective support shells 68, 70 and heat shields 72, 74. The cooling impingement holes 104 are generally normal to the surface of the heat shields 72, 74. The air in the cavities 106A, 106B provides backside impingement cooling of the heat shields 72, 74 that is generally defined herein as heat removal via internal convection.

A multiple of cooling film holes 108 penetrate through each of the heat shields 72, 74. The geometry of the film holes, e.g., diameter, shape, density, surface angle, incidence angle, etc., as well as the location of the holes with respect to the high temperature main flow also contributes to effusion film cooling. The combination of impingement holes 104 and film holes 108 may be referred to as an Impingement Film Floatliner assembly.

The cooling film holes 108 allow the air to pass from the cavities 106A, 106B defined in part by a cold side 110 of the heat shields 72, 74 to a hot side 112 of the heat shields 72, 74 and thereby facilitate the formation of a film of cooling air along the hot side 112. The cooling film holes 108 are generally more numerous than the impingement holes 104 to promote the development of a film cooling along the hot side 112 to sheath the heat shields 72, 74. Film cooling as defined herein is the introduction of a relatively cooler airflow at one or more discrete locations along a surface exposed to a high temperature environment to protect that surface in the immediate region of the airflow injection as well as downstream thereof.

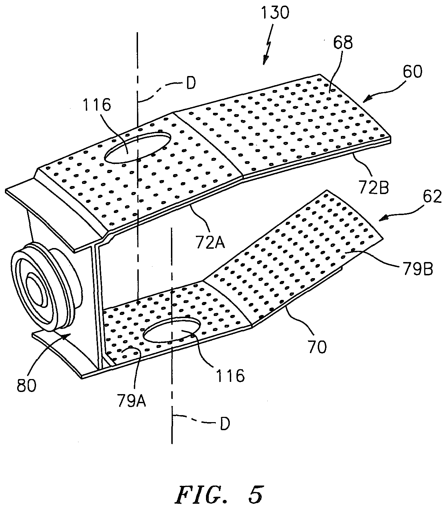

A multiple of dilution holes 116 penetrate through both the respective support shells 68, 70 and heat shields 72, 74 along a common axis D (Figure 5). For example only, in a Rich-Quench-Lean (R-Q-L) type combustor, the dilution holes 116 are located downstream of the forward assembly 80 to quench the hot gases by supplying cooling air into the combustor. The hot combustion gases slow towards the dilution holes 116 and may form a stagnation point at the leading edge which becomes a heat source. At the trailing edge of the dilution hole, due to interaction with dilution jet, hot gases form a standing vortex pair that may also become a heat source.

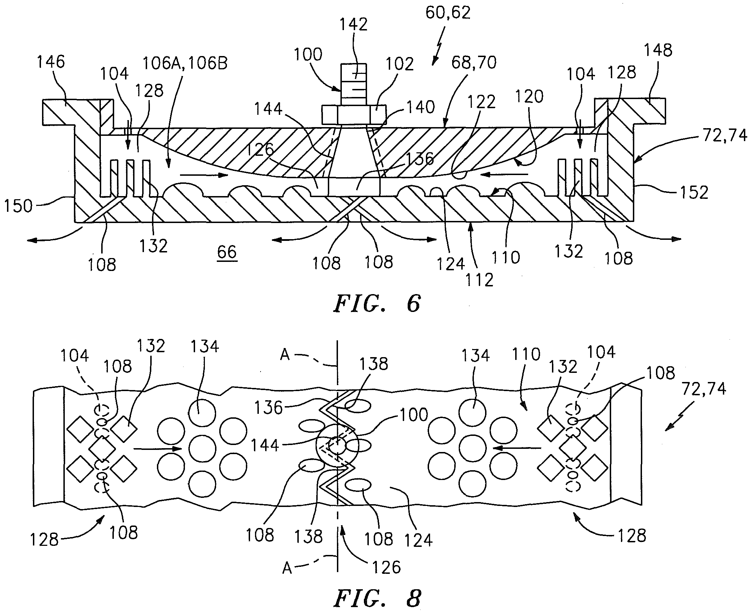

With reference to Figure 6, a lateral cross-section of the support shells 68, 70 and heat shields 72, 74 with their respective cavities 106A, 106B are illustrated with respect to the combustion chamber 66. Although only one of the support shells 68, 70 and heat shields 72, 74 is illustrated and described in detail hereafter, it should be understood that each of the support shells 68, 70 and heat shields 72, 74 are generally the same and need not be described in detail herein.

An inner surface 120 of each support shell 68, 70 defines a convex profile 122 defined by a hyperbolic cosine function that faces an inner surface 124 of the heat shields 72, 74 within the respective cavities 106A, 106B. That is, the convex profile 122 results in the support shell 68, 70 being non-parallel to the respective heat shields 72, 74. The inner surface 120 of each support shell 68, 70 defines a relatively thin cavity zone 126 along a central portion of each combustor section 130 with respect to the inner surface 124 of the heat shields 72, 74. That is, the relatively thin cavity zone 126 is defined generally parallel to the engine axis A and is flanked by relatively thicker cavity zones 128 of each combustor section 130 (Figure 5).

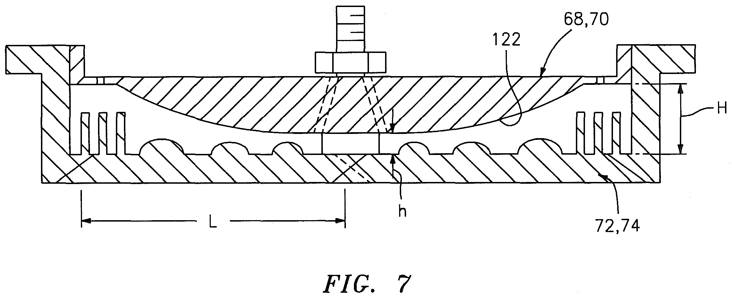

With Reference to Figure 7, the convex profile 122 is defined by a hyperbolic cosine function, cosh, optionally providing an approximate 4.5 inlet-to-exit area ratio. The inlet-to-exit area ratio forces a flow acceleration toward approximately 0.5 Mach at an end of a circumferential convergent flow section. A corresponding increase in Reynolds number facilitates higher internal heat transfer coefficients for cooling.

With reference to Figure 8, the relatively thicker cavity zones 128 receive airflow from the impingement holes 104. The airflow within the cavities 106A, 106B is from the relatively thicker cavity zones 128 toward the relatively thin cavity zone 126 to define the circumferential convergent flow section. That is, the airflow is generally in the circumferential direction rather than the axial direction.

In one disclosed non-limiting embodiment, the impingement holes 104 direct airflow onto a multiple of pin fins 132. The pin fins 132 in one example, may be diamond shaped pins that are approximately ½ - ¾ the height between the inner surfaces 120, 124 in the relatively thicker cavity zones 128. It should be appreciated that other heights may be provided.

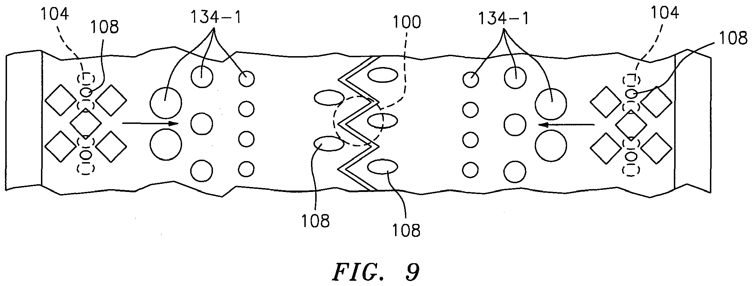

Inboard of the multiple of pin fins 132, a multiple of hemispherical dimples 134 are located toward an exit splitter 136. In one disclosed non-limiting embodiment, the hemispherical dimples 134 are of the same diameter but are progressively deeper into the inner surface 124. That is, centers of the respective spheres which define the hemispherical dimples 134 are progressively deeper into the combustion chamber 66. In another disclosed non-limiting embodiment, the hemispherical dimples 134-1 are progressively smaller diameters toward the exit splitter 136 (Figure 9). The hemispherical dimples 134, 134-1 allow for less pressure resistance (less friction) that facilitates convergent flow channel acceleration capabilities. The hemispherical dimples 134, 134-1 reduce the frictional drag resistance to the cooling flow yet augment cooling of the inner surface 124. It should be appreciated that the hemispherical dimples 134, 134-1 may be arranged in various patterns.

The exit splitter 136 is zigzag in shape along the axis A. A film hole 108 is located in a valley 138 on each side of the zigzag exit splitter 136. As defined herein "zigzag" includes, but is not limited to, any serpentine, saw tooth or non-straight wall.

The exit splitter 136 also forms a base for a frustro-conical stud 100 (only one shown). The stud 100 is received within a corresponding aperture 140 in the heat shields 72, 74, such that as the fastener 102 is tightened down on a threaded interface 142, the aperture 140 seals and tightens onto the frustro-conical stud portion 144 (Figure 6).

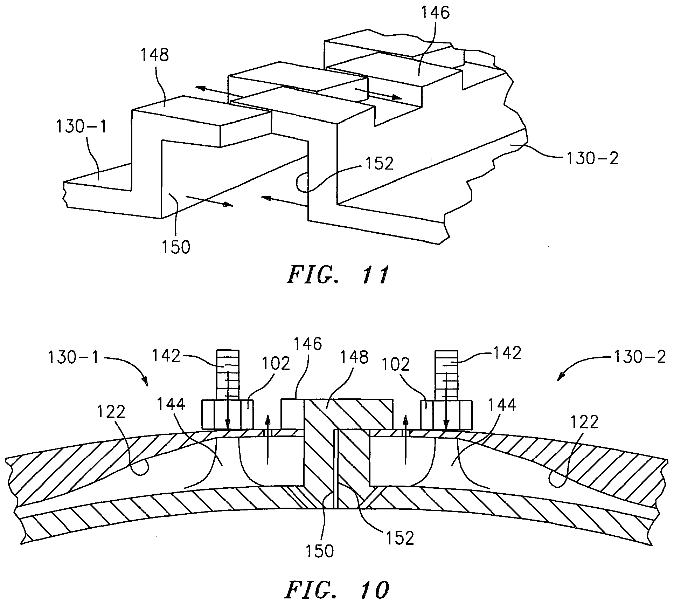

With reference to Figure 10 the threaded interface 142 also forces sets of interleaved hooks 146, 148 along each edge 150, 152 of the heat shields 72, 74 to be forced together to facilitate a seal between each adjacent combustor section 130-1, 130-2 (Figure 11). It should be appreciated that the frustro-conical studs 100 may alternatively or additionally located in other locations such as along the edges 150, 152. The interleaved hooks 146, 148 react the force applied to the frustro-conical stud 100 to minimize leakage.

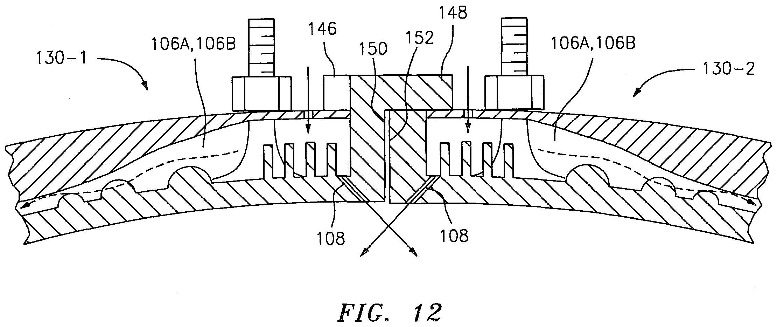

With reference to Figure 12, the film holes 108 along edge 150 of one combustor section 130-1 are directed toward edge 152 of the adjacent combustor section 130-2 and vice-versa. The cross-flow from the film holes 108 along edges 150, 152 protect the edges 150, 152 and further facilitates a seal between the interleaved hooks 146, 148.

The frustro-conical stud 100 and interleaved hooks 146, 148 facilitate a relatively higher pressure within the cavities 106A, 106B. In one example, an equal number of impingement holes 104 and film holes 108 are located in each combustor section 130 to provide a approximately 50:50 pressure split as compared to a more conventional 80:20 pressure split with approximately half the number of impingement holes 104 compared to the film holes 108. The 50:50 pressure split permits a relatively higher pressure within the cavities 106A, 106B thereby permitting a relatively smaller number of holes and thereby a more efficient usage of air by spacing impingement holes 104 and film holes 108 further apart. Reduced reaction flame temperatures are also avoid local stoichiometric conditions and thereby reduce NOx formation

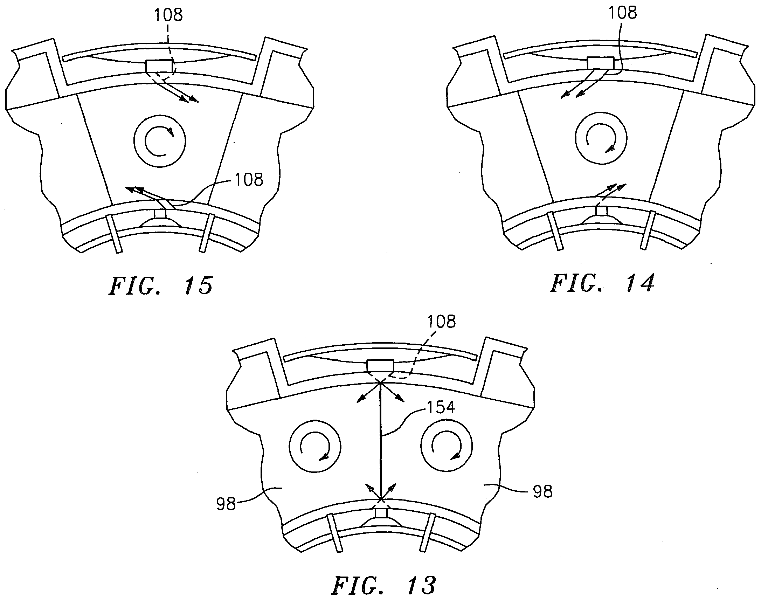

With reference to Figure 13, the film holes 108 adjacent to the zigzag exit splitter 136 may be directed across an interface 154 between circumferentially distributed bulkhead heat shields 98. That is, the film holes 108 along one side of the exit splitter 136 are directed toward the opposite side and vice-versa. Such an arrangement may be advantageous when the fuel nozzle pre-swirlers 90 are axially displaced from the film holes 108.

With reference to Figure 14, in another disclosed non-limiting embodiment, the film holes 108 on both sides of the zigzag exit splitter 136 through the heat shields 72, 74 are directed in a direction in coordination with the rotational direction of the fuel nozzle pre-swirlers 90. Such an arrangement may be advantageous when the fuel nozzle pre-swirlers 90 are positioned relatively close to the film holes 108. It should be appreciated that the rotational direction may be clockwise or counter-clockwise.

With reference to Figure 15, in another disclosed non-limiting embodiment, the film holes 108 on both sides of the zigzag exit splitter 136 through the heat shields 72, 74 are directed in a direction opposite the rotational direction of the fuel nozzle pre-swirlers 90.

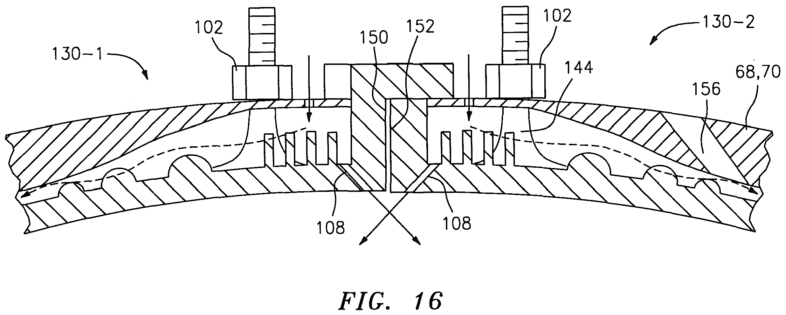

With reference to Figure 16, the convex profile 122 may include pre-drilled apertures 156 located in potential hot spots. These apertures 156 are not initially drilled completely through the support shell 68, 70. That is, the pre-drilled aperture 156 are placed in the convergent section close to an area where hot-spots may occur. Should the hot-spot prediction be realized, then apertures 156 are drilled completely through the support shell 68, 70 to supply refresher air into the convergent section pre-drilled apertures 156. This will effectively address the hot-spot by maintaining the coolant heat pick-up low; while introducing more convective flow into the circuit. Furthermore, even if not drilled completely through, the pre-drilled apertures 156 provide weight reduction.

It should be understood that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A liner assembly (60, 62) for a combustor (56) of a gas turbine engine (20) comprising:
a heat shield (72, 74); and
a support shell (68, 70) with a convex profile (122) which faces said heat shield (72, 74);
**characterised in that**:
said convex profile (122) is defined by a hyperbolic cosine function.

2. The liner assembly as recited in claim 1, wherein said convex profile (122) provides an approximate 4.5 inlet-to-exit area ratio.

3. The liner assembly as recited in claim 1 or 2, wherein said convex profile (122) is configured to provide a flow acceleration toward approximately 0.5 Mach towards an end of a circumferential convergent flow section of the liner assembly (60, 62), in which the airflow is generally in the circumferential direction.

4. The liner assembly as recited in any preceding claim, further comprising an exit splitter (136) that extends from said heat shield (72, 74).

5. The liner assembly as recited in claim 4, wherein said exit splitter (136) is zigzag in shape.

6. The liner assembly as recited in claim 5, further comprising a film hole (108) located in a valley (138) on each side of said exit splitter (136).

7. The liner assembly as recited in any preceding claim, further comprising a plurality of studs (100) which extend from said heat shield (72, 74) and are received through said support shell (68, 70), said stud (100) include a frustro-conical section.

8. The liner assembly as recited in any preceding claim, wherein said heat shield (72, 74) includes a number of film holes (108) which are approximately equal to a number of impingement holes (104) through said support shell (68, 70).

9. The liner assembly as recited in any preceding claim, wherein said heat shield (72, 74) includes a multiple of pin fins (132).

10. The liner assembly as recited in claim 9, wherein said multiple of pin fins (132) are diamond-shaped.

11. The liner assembly as recited in any preceding claim, wherein said heat shield (72, 74) includes a multiple of hemi-spherical dimples (134).

12. The liner assembly as recited in claim 11, wherein said multiple of hemi-spherical dimples (134) decrease in diameter toward an exit splitter (136).

13. The liner assembly as recited in claim 11 or 12, wherein a center of said sphere of each of said multiple of hemi-spherical dimples (134) are further displaced from an inner surface (124) of said heat shield (72, 74) toward an exit splitter (136).

## Patentansprüche

1. Auskleidungsanordnung (60, 62) für eine Brennkammer (56) eines Gasturbinentriebwerks (20), die Folgendes umfasst:
einen Hitzeschild (72, 74); und
eine Stützschale (68, 70) mit einem konvexen Profil (122), das dem Hitzeschild (72, 74) zugewandt ist;
**dadurch gekennzeichnet, dass**:
das konvexe Profil (122) durch eine hyperbolische Cosinusfunktion definiert ist.

2. Auskleidungsanordnung nach Anspruch 1, wobei das konvexe Profil (122) ein Verhältnis von einer Einlass- zu einer Ausgangsregion von etwa 4,5 bereitstellt.

3. Auskleidungsanordnung nach Anspruch 1 oder 2, wobei das konvexe Profil (122) dazu konfiguriert ist, eine Strömungsbeschleunigung auf etwa 0,5 Mach in Richtung eines Endes, in dem die Luftströmung im Allgemeinen in die Umfangsrichtung läuft, eines konvergenten Strömungsbereichs der Auskleidungsanordnung (60, 62) in Umfangsrichtung bereitzustellen.

4. Auskleidungsanordnung nach einem der vorhergehenden Ansprüche, ferner umfassend einen Ausgangsteiler (136), der sich von dem Hitzeschild (72, 74) erstreckt.

5. Auskleidungsanordnung nach Anspruch 4, wobei der Ausgangsteiler (136) zickzackförmig ist.

6. Auskleidungsanordnung nach Anspruch 5, ferner umfassend ein Filmloch (108), das sich in einem Tal (138) auf jeder Seite des Ausgangsteilers (136) befindet.

7. Auskleidungsanordnung nach einem der vorhergehenden Ansprüche, ferner umfassend eine Vielzahl von Bolzen (100), die sich von dem Hitzeschild (72, 74) erstrecken und durch die Stützschale (68, 70) aufgenommen werden, wobei der Bolzen (100) einen kegelstumpfförmigen Bereich einschließen.

8. Auskleidungsanordnung nach einem der vorhergehenden Ansprüche, wobei der Hitzeschild (72, 74) eine Anzahl von Filmlöchern (108) einschließt, die etwa gleich einer Anzahl von Pralllöchern (104) durch die Stützhülle (68, 70) ist.

9. Auskleidungsanordnung nach einem der vorhergehenden Ansprüche, wobei der Hitzeschild (72, 74) eine Mehrzahl von Stiftkühlkörpern (132) einschließt.

10. Auskleidungsanordnung nach Anspruch 9, wobei die Mehrzahl von Stiftkühlkörpern (132) rautenförmig sind.

11. Auskleidungsanordnung nach einem der vorhergehenden Ansprüche, wobei der Hitzeschild (72, 74) eine Mehrzahl von halbkugelförmigen Vertiefungen (134) einschließt.

12. Auskleidungsanordnung nach Anspruch 11, wobei die Vielzahl von halbkugelförmigen Vertiefungen (134) in Richtung eines Ausgangsteilers (136) im Durchmesser verringern.

13. Auskleidungsanordnung nach Anspruch 11 oder 12, wobei eine Mitte der Kugel der mehreren halbkugelförmigen Vertiefungen (134) jeweils in Richtung eines Ausgangsteilers (136) weiter von einer Innenfläche (124) des Hitzeschilds (72, 74) entfernt liegen.

## Revendications

1. Ensemble revêtement (60, 62) pour une chambre de combustion (56) d'un moteur à turbine à gaz (20) comprenant :
un écran thermique (72, 74) ; et
une coque de support (68, 70) avec un profil convexe (122) qui fait face audit écran thermique (72, 74) ;
**caractérisé en ce que** :
ledit profil convexe (122) est défini par une fonction cosinus hyperbolique.

2. Ensemble revêtement selon la revendication 1, dans lequel ledit profil convexe (122) fournit un rapport de surface approximatif d'entrée/sortie de 4,5.

3. Ensemble revêtement selon la revendication 1 ou 2, dans lequel ledit profil convexe (122) est configuré pour fournir une accélération de flux approximative de 0,5 Mach vers une extrémité d'une section de flux convergente circonférentielle de l'ensemble revêtement (60, 62), dans laquelle le flux d'air est généralement dans la direction circonférentielle.

4. Ensemble revêtement selon une quelconque revendication précédente, comprenant en outre une séparation de sortie (136) qui s'étend à partir dudit écran thermique (72, 74).

5. Ensemble revêtement selon la revendication 4, dans lequel ladite séparation de sortie (136) a une forme en zigzag.

6. Ensemble revêtement selon la revendication 5, comprenant en outre un trou de film (108) situé dans un creux (138) de chaque côté de ladite séparation de sortie (136).

7. Ensemble revêtement selon une quelconque revendication précédente, comprenant en outre une pluralité de goujons (100) qui s'étendent à partir dudit écran thermique (72, 74) et sont reçus à travers ladite coque de support (68, 70), lesdits goujons (100) incluent une section tronconique.

8. Ensemble revêtement selon une quelconque revendication précédente, dans lequel ledit écran thermique (72, 74) inclut un nombre de trous de film (108) qui est approximativement égal à un nombre de trous d'impact (104) à travers ladite coque de support (68, 70).

9. Ensemble revêtement selon une quelconque revendication précédente, dans lequel ledit écran thermique (72, 74) inclut une multiplicité d'ailettes en forme de tiges (132).

10. Ensemble revêtement selon la revendication 9, dans lequel ladite multiplicité d'ailettes en forme de tiges (132) sont en forme de losange.

11. Ensemble revêtement selon une quelconque revendication précédente, dans lequel ledit écran thermique (72, 74) inclut une multiplicité d'alvéoles hémisphériques (134) .

12. Ensemble revêtement selon la revendication 11, dans lequel ladite multiplicité d'alvéoles hémisphériques (134) ont un diamètre qui diminue en direction d'une séparation de sortie (136).

13. Ensemble revêtement selon la revendication 11 ou 12, dans lequel un centre de ladite sphère de chacune de ladite multiplicité d'alvéoles hémisphériques (134) est en outre déplacé par rapport à une surface interne (124) dudit écran thermique (72, 74) vers une séparation de sortie (136).
